# EUROPEAN PATENT APPLICATION

(11) **EP 1 482 628 A2**
(43) Date of publication of application: **01.12.2004**
(21) Application number: 04253117.8
(22) Date of filing: 27.05.2004
(51) Int. Cl.: H02K 55/04

(54) **Dynamoelectric machine including superconducting windings**

(30) Priority: 27.05.2003 US 444253
(71) Applicant: General Electric Company, Schenectady, NY 12345 (US)
(72) Inventor: Sivasubramaniam, Kiruba, clifton Park New York 12065 (US); Laskaris, Evangelos Trifon, Schenectrady, New York 12309 (US); Alexander, James Pellegrino, Ballston Lake, New York 12019 (US)
(74) Representative: Goode, Ian Roy

(57) **Abstract**

A dynamoelectric machine (10) is provided. The machine includes a stator (26) comprising a stationary magnetic core (28), and a plurality of stator windings (32) positioned within said core, said windings electrically coupled to form an electrical circuit, a rotor (12) comprising at least one set of salient pole pieces (22) coupled to a shaft (14), each said set of pole pieces for generating a rotating magnetic field, and a superconducting field coil (40) circumscribing said shaft for generating a magnetic field in each said set of pole pieces.

## Description

The present invention relates generally to electrical motor/generators, and more particularly to homopolar machines including superconducting windings.

At least some known superconducting electric machines include a superconducting field coil installed on the rotor. The superconducting coil is maintained at a temperature approaching zero degrees Kelvin using a continuous supply of cryogenic fluid, such as, for example, but not limited to helium (He₂). If a high temperature superconductor (HTS) is used in fabricating the field coil, a cryogenic fluid such as nitrogen (N₂) may be used to achieve superconducting temperatures. The cryogenic fluid is typically supplied to the superconducting field coil from a stationary cryocooler through a transfer coupling that is coupled to one end of the rotor The transfer coupling channels the cryogenic fluid from a stationary portion to a rotating portion on the rotor. The cryogenic fluid is then routed through a cooling loop thermally coupled to the superconducting field coil and then back to the transfer coupling for return to the stationary cryocooler.

The superconducting field coil is subjected to thermal stresses, centrifugal stresses, and is provided with an electrical connection through the rotor to power the superconducting field coil. Accordingly, designing, fabricating and operating such a rotor may be difficult. For example, the superconducting coils, especially HTS coils, may be sensitive to mechanical strain. Specifically, because the coils are coupled to the rotor, the coils may be subjected to centrifugal forces that may cause strains and degrade the performance of the superconductor. In addition, because the coil is maintained at a cryogenic temperature, an elaborate support system may be needed to maintain the coil in position against the centrifugal forces while preserving the integrity of the thermal insulation between the coil and the parts of the rotor at ambient temperature.

According to the present invention, in one aspect, a method of generating electricity using a stationary superconducting field coil and a stationary stator winding is provided. The method includes creating a magnetic field with the field coil, rotating a homopolar rotor within the magnetic field such that a rotating magnetic field is created in the stationary stator winding by an interaction of a rotating permeance wave produced by the rotating rotor and the magnetic field produced by the stationary field coil.

In another aspect of the invention, a rotor for a dynamoelectric machine is provided. The rotor includes a ferromagnetic shaft, a plurality of circumferentially-spaced first pole pieces coupled to the shaft and extending radially outwardly from the shaft, the plurality of first pole pieces axially-aligned with respect to the shaft, and a plurality of circumferentially-spaced second pole pieces coupled to the shaft, the plurality of second pole pieces spaced axially apart from the plurality of first pole pieces, the plurality of second pole pieces axially-aligned with respect to the shaft.

In yet another aspect, a dynamoelectric machine is provided. The machine includes a stator that includes a stationary magnetic core that includes a plurality of axial grooves, and a plurality of stator windings positioned within the grooves, the windings electrically coupled to form an electrical circuit, a rotor that includes at least one set of salient pole pieces coupled to a shaft, each set of pole pieces for generating a rotating magnetic field, and a superconducting field coil circumscribing the shaft for generating a magnetic field in each set of pole pieces.

Embodiments of the invention will now be described, by way of example, with reference to the accompanying drawings, in which:
Figure 1 is a partial cross-sectional side view of an exemplary embodiment of a homopolar electrical machine.
Figure 2 is a perspective view that illustrates an exemplary rotor that may be used with the machine shown in Figure 1.
Figure 3 is a cutaway end view of the rotor shown in Figure 2 taken along Line 3-3 shown in Figure 1.
Figure 4 is a perspective view that illustrates an alternative exemplary rotor that may be used with the machine shown in Figure 1.
Figure 5 is a partial cutaway perspective view of an exemplary pair of windings that may be used in the machine when using the alternative embodiment of the rotor shown in Figure 4.

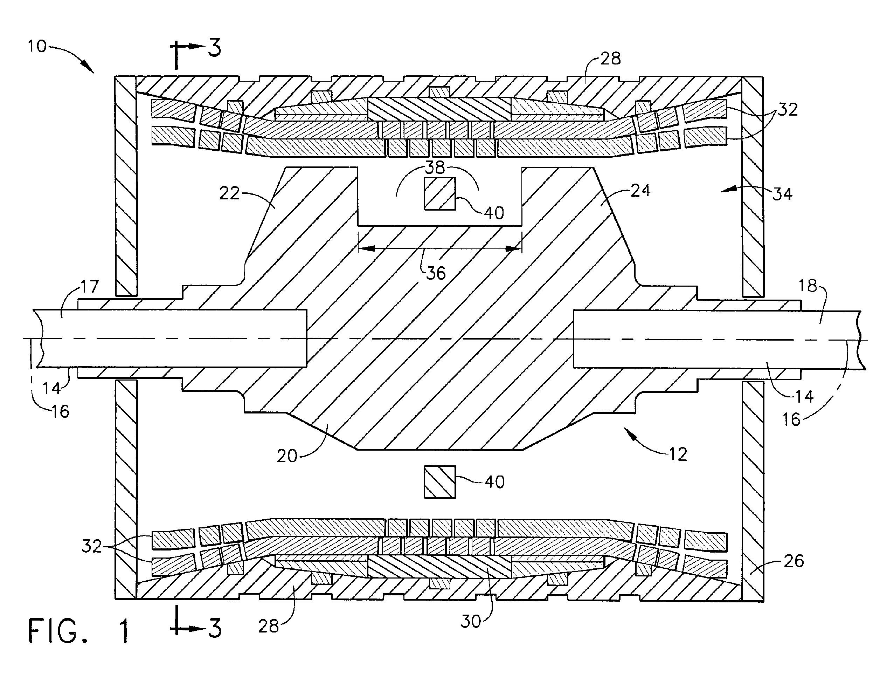

Figure 1 is a side partial cross-sectional view of an exemplary embodiment of a homopolar electrical machine 10 that includes a rotor 12 that includes a shaft 14 having a longitudinal axis 16. Rotor 12 is rotatable about axis 16. In the exemplary embodiment, shaft 14 is segmented such that a first shaft stub 17 and a second shaft stub 18 form shaft 14. Rotor 12 also includes at least one pole piece assembly 20 that includes a plurality of first pole pieces 22 that are separated axially on pole piece assembly 20 from a plurality of second pole pieces 24. In an alternative embodiment, shaft 12 is formed as a single monolithic structure that includes first pole pieces 22 and second pole pieces 24, axially separated and coupled to shaft 14. In another alternative embodiment, pole piece assembly 20, first pole pieces 22 and/or second pole pieces 24 are integrally formed with shaft 14 to define a monolithic rotor. In the exemplary embodiment, only one pole piece assembly 20 is illustrated. It should be understood that any number of pole piece assemblies 20 may be coupled together in tandem to define a rotor 12. Additionally, it should be understood that in the monolithic shaft 14 embodiment, any number of pole piece sets may be coupled to shaft 14 to define rotor 12. In an alternative embodiment, each plurality of homopolar pole pieces 22, 24 includes at least one additional row of a plurality of homopolar pole pieces (not shown) to improve dynamic performance. Each additional row of the plurality of pole pieces are displaced axially with respect to shaft 14 from each plurality of pole pieces 22, 24.

Rotor 12 is rotatably supported by a casing 26 that also houses a stator core 28 and stator yoke 30. A plurality of stator windings 32 are positioned in axial channels defined within core 28. Casing 26 is substantially cylindrical and includes a bore 34 extending therethrough. Rotor 12 is positioned at least partially within bore 34.

An axial separation distance 36 extending between first pole pieces 22 and second pole pieces 24 defines an air gap 38 between a field coil 40 and first pole pieces 22 and between field coil 40 and second pole pieces 24. In the exemplary embodiment, field coil 40 is positioned within a cryostat (not shown) that is coupled to stator core 28. Coil 40 is mechanically decoupled from rotor 12, and in the exemplary embodiment, is supported by stationary coil supports (not shown). In an alternative embodiment field coil 40 may be coupled to the rotor 12. Field coil 40 is fabricated from a superconducting material such that when cooled to superconducting temperatures, field coil 40 exhibits substantially zero resistance to electrical current flow.

In operation, machine 10 operates as an electrical generator or motor. Rotor 12 is rotated about axis 16 by a torsional force applied to it by a prime mover (not shown) coupled to shaft 14. An electrical current is supplied to stationary superconducting field coil 40. The electrical current generates a magnetic field surrounding field coil 40. Ferromagnetic shaft 14 passes through the axis of field coil 40, and therefore is magnetically coupled to field winding 40. The orientation of field coil 40 and first and second pole pieces 22 and 24 creates an interaction between the magnetic field of coil 40 and a permeance wave of the rotating ferro-magnetic poles 22 and 24 such that first pole pieces 22 are magnetized to a first polarity, North, for example, and such that second pole pieces 24 are magnetized to a second polarity, South, for example. The rotating homopolar magnetic field is magnetically coupled to stator windings 32.

In the exemplary embodiment, field coil 40 is stationary with respect to rotor 12 such that a relative difference in rotational speed between rotor 12 and the magnetic field generated by field coil 40 is the rotational speed of rotor 12. In an alternative embodiment, the magnetic field generated by field coil 40 rotates about axis 16 at least one of at a rate faster than rotor 12 and at a rate slower than rotor 12.

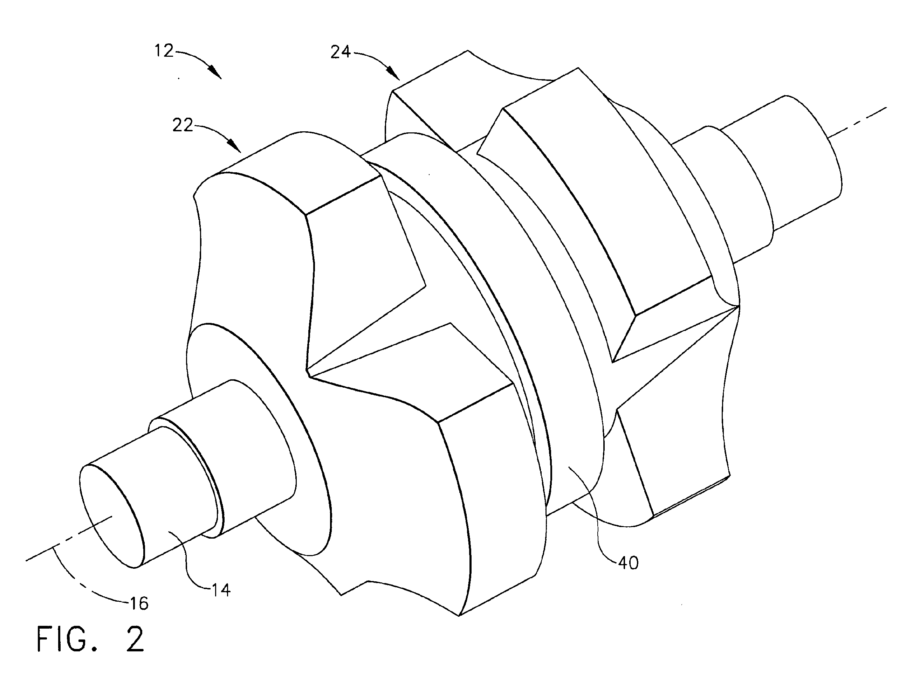

Figure 2 is a perspective view that illustrates an exemplary rotor 12 that may be used with machine 10 (shown in Figure 1). Rotor 12 includes shaft 14, first pole pieces 22 and second pole pieces 24. Pole pieces 22 and 24 define a pole set. The rotor configuration is homopolar such that the plurality of first pole pieces 22 have the same generated magnetic polarity, and the plurality of second pole pieces 24 also have the same generated magnetic polarity. In the exemplary embodiment, each of the plurality of first pole pieces 22 corresponds to a respective one of the plurality of second pole pieces 24. For example, rotor 12 is shown in Figure 2 as including only three pole pieces in each of the plurality of first pole pieces 22 and the plurality of second pole pieces 24. However alternatively, each first pole piece 22 is offset angularly in the direction of rotation of rotor 12 from a respective corresponding one of the second pole pieces 24 by approximately one pole-pitch. The offset of poles 22 and 24 defines a rotating magnetic field of varying magnitude and reversing polarity to stator windings 32, which facilitates generating an alternating electrical output, for example, a sine wave from machine 10.

In operation, an electrical current is supplied to stationary superconducting field coil 40. Current flowing through the superconducting conductors of coil 40 generates a magnetic field surrounding coil 40. First pole pieces 22 and second pole pieces 24 rotate proximate to coil 40 and are magnetically coupled to coil 40. The interaction of the magnetic field generated by coil 40 and the permeance wave of the rotating ferro-magnetic pole pieces 22 and 24 of rotor 12 produces a rotating magnetic field with first pole pieces 22 oriented at a first magnetic polarity, North, for example, and second pole pieces 24 oriented at a second magnetic polarity, South for example. The magnetic lines of flux from pole pieces 22 and 24 pass through stator windings 32 (shown in Figure 1) and generate a current flow in stator windings 32.

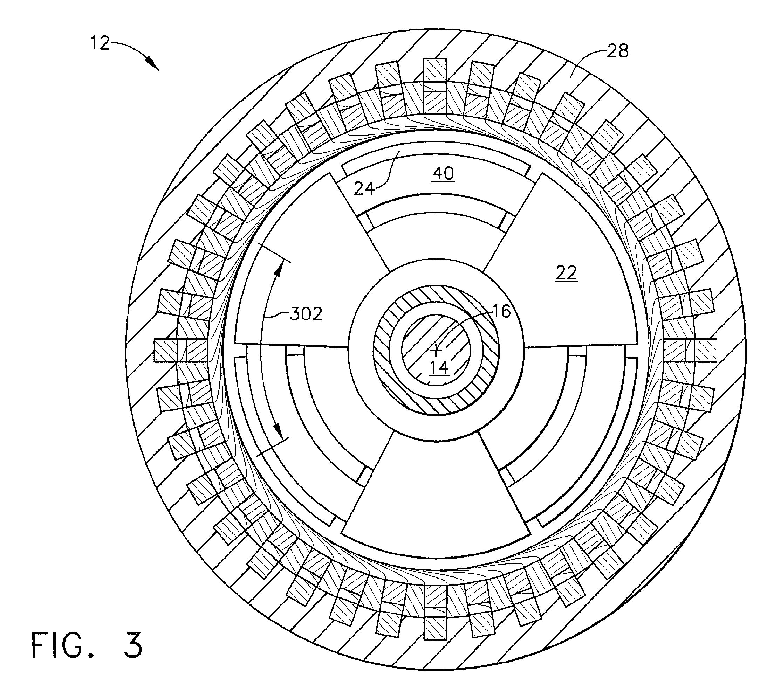

Figure 3 is a cutaway end view of rotor 12 taken along line 3-3 shown in Figure 1. Angle 302 represents an angular offset between the first pole pieces 22 and second pole pieces 24. In the exemplary embodiment, angle 302 represents an angular offset of approximately one pole pitch.

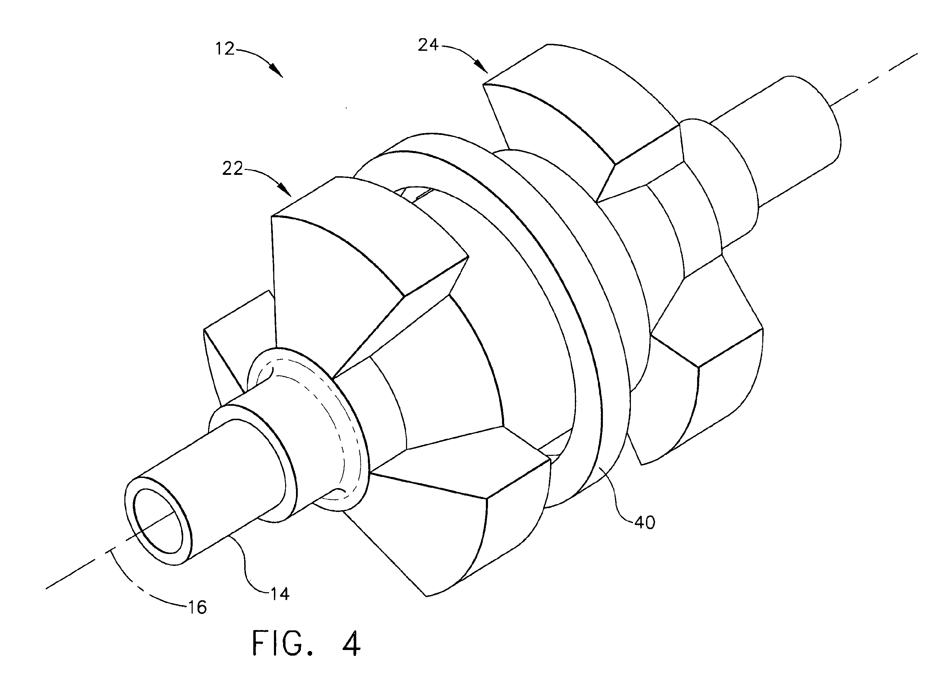

Figure 4 is a perspective view that illustrates an alternative exemplary rotor 12 that may be used with machine 10 (shown in Figure 1). In the alternative embodiment, each of first pole pieces 22 is inline with a corresponding respective second pole piece 24. Field coil 40 generates a magnetic field that interacts with each of first pole pieces 22 and each of second pole pieces 24 to generate a magnetic pole of a first polarity in each of first pole pieces 22 and to generate a magnetic pole of a second opposite polarity in each of second pole pieces 24. In the exemplary embodiment, stator windings 32 are offset by approximately one pole-pitch to generate aiding currents in stator windings 32. For example, if stator windings 32 were substantially axially positioned in stator core 28, the magnetic field of first pole pieces 22 would generate a current of a first polarity in stator windings 32 and second pole pieces 24 would generate current of a second opposite polarity in each winding of stator winding 32. The net result of opposing current flow in each winding of stator windings 32 would be substantially zero current flow in stator windings 32. Therefore, each pole pieces of first pole pieces 22 and each respective pole piece of second pole pieces 24 are offset approximately one pole pitch to facilitate eliminating generating opposing currents in stator windings 32.

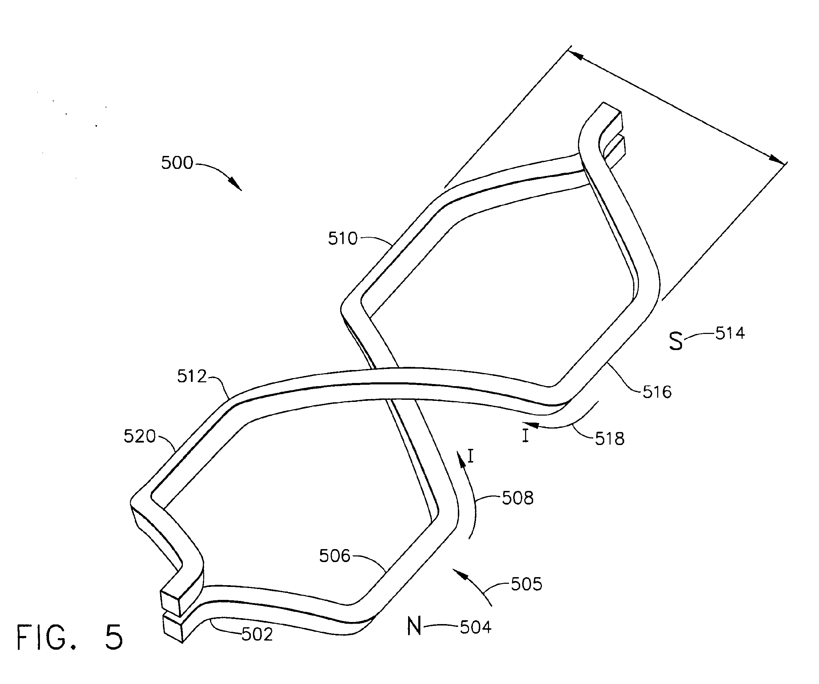

Figure 5 is a partial cutaway perspective view of an exemplary pair of windings that may be used in machine 10 when using the alternative embodiment of rotor 12 shown in Figure 4. A first winding 502 is illustrated with a North polarity pole 504 passing in direction 505 proximate a first portion 506 of winding 502. A current 508 is generated in first winding 502 from the interaction of the rotating magnetic pole 504 and winding 502. First winding 502 is channeled approximately one pole pitch away from portion 506 to portion 510, which is located proximate to a space between second pole pieces 24. With no pole pieces proximate portion 510, there is substantially zero current generated in portion 510, therefore current flows through winding 502. Similarly, a second winding 512 is illustrated with a South polarity pole 514 passing in direction 505 proximate a first portion 516. A current 518 is generated in second winding 512 from the interaction of the rotating magnetic pole 514 and winding 512. Second winding 512 is directed one pole pitch away from portion 516 to portion 520, which is located proximate a space between first pole pieces 24. With no pole pieces proximate portion 520, there is substantially zero current generated in portion 520, therefore current flows through winding 512.

The above-described methods and apparatus provide a cost-effective and reliable means for generating electricity using a stationary field coil and a homopolar rotor. More specifically, the methods and apparatus facilitate utilizing a superconducting field coil that is stationary with respect to the machine rotor. As a result, the methods and apparatus described herein facilitate generating electrical power in a cost-effective and reliable manner.

Furthermore, many advantages result from positioning field coil 40 mechanically separate from rotor 14 and maintaining coil 40 stationary, including facilitating making machine 10 simple and reliable. For example, a stationary field coil does not experience relatively large centrifugal forces that may be produced in a rotating field coil, therefore facilitating simplifying a coil support assembly. Thermal insulation between the stationary field coil and ambient temperature may be fabricated more simply due to reduced requirements on the field coil support. In the absence of relatively large forces acting of the field coil, the resulting strains in the superconducting coil may be less, producing a more reliable HTS coil. With a stationary coil circumscribing the rotor , the field coil may be designed as a more simple solenoid coil rather than a more complicated "racetrack" coil. The cryostat cooling a stationary field coil is also stationary, facilitating a simpler cryostat design. For example, a complicated transfer coupling is not needed to direct a cooling medium into the rotating cooling circuit, a simple direct cooling connection may be used. The coil may, instead, be cooled in one of the established, more reliable ways of cooling, including conduction cooling. A vacuum, desirable for thermal insulation may be made stationary, facilitating simpler and more reliable fabrication and assembly. Similarly, other portions of the insulation system may be made more reliable without having to consider relatively large centrifugal forces. There is no need for a 'slip-ring' assembly to transfer current to the field coil from a stationary exciter. The voltage across the coil is then more predictable and makes it easier to detect quench and protect the coil with a reliable stationary protection circuit. Additionally there is no need to consider rotating brushless exciters.

Exemplary embodiments of electrical generating systems are described above in detail. The systems are not limited to the specific embodiments described herein, but rather, components of each system may be utilized independently and separately from other components described herein. Each system component can also be used in combination with other system components.

## Claims

1. A dynamoelectric machine (10) comprising:
a stator (26) comprising a stationary magnetic core (28), and a plurality of stator windings (32) positioned within said core, said windings electrically coupled to form an electrical circuit;
a rotor (12) comprising at least one set of salient pole pieces (22) coupled to a shaft (14), each said set of pole pieces for generating a rotating magnetic field; and
a superconducting field coil (40) circumscribing said shaft for generating a magnetic field in each said set of pole pieces.

2. A machine in accordance with Claim 1 wherein said set of salient pole pieces comprises a plurality of axially aligned first pole pieces (22) coupled to said shaft and a plurality of axially aligned second pole pieces (24) coupled to said shaft, said plurality of second pole pieces spaced axially apart from said plurality of first pole pieces.

3. A machine in accordance with Claim 2 wherein said field coil circumscribes said shaft between said plurality of first pole pieces and said plurality of second pole pieces.

4. A machine in accordance with Claim 2 wherein said field coil is magnetically coupled to at least one of said shaft, said plurality of first pole pieces, and said plurality of second pole pieces.

5. A machine in accordance with Claim 1 wherein said field coil is positioned within a cryostat mounted within said stator core (28).

6. A machine in accordance with Claim 2 wherein said plurality of first pole pieces are homopolar, and said plurality of second pole pieces are homopolar.

7. A machine in accordance with Claim 1 wherein each said stator winding is substantially axially oriented.

8. A machine in accordance with Claim 1 wherein each said stator winding includes a first substantially axially oriented portion 506 and a second substantially axially oriented portion 510 wherein the second substantially axially oriented portion is displaced circumferentially approximately one pole pitch from the first substantially axially oriented portion.

9. A machine in accordance with Claim 8 wherein each said first portion is electrically coupled to a respective second portion using a third portion that is oriented substantially diagonally to a longitudinal axis of said rotor.

10. A machine in accordance with Claim 9 wherein each said stator winding is unitarily formed.
